# EUROPÄISCHE PATENTANMELDUNG

(11) **EP 2 333 429 A2**
(43) Veröffentlichungstag der Anmeldung: **15.06.2011**
(21) Anmeldenummer: 10192538.6
(22) Anmeldetag: 25.11.2010
(51) Int. Cl.: F24D 3/10, F24D 3/18, F24D 19/10

(54) **Steuer- und Versorgungseinrichtung**

(30) Priorität: 26.11.2009 DE 102009044674
(71) Anmelder: Domoteck, Ltd., 24959 Tefen (IL)
(72) Erfinder: Klein, Dan, 24959, Tefen (IL)
(74) Vertreter: Katscher Habermann Patentanwälte

(57) **Zusammenfassung**

Eine Steuer- und Versorgungseinrichtung (16) zur steuerbaren Versorgung von mindestens einem Verbraucherkreislauf (10, 11) mit einem Wärmeübertragungsmedium umfasst eine Mischkammer (5), die einen mit einem Einspritzventil (4) steuerbaren Zulauf aufweist, eine Steuereinrichtung (6) zur Ansteuerung des Einspritzventils (4), eine mit der Mischkammer (5) verbundene Verteileinrichtung (7) mit Anschlüssen (9) für mindestens einen Vorlauf des mindestens einen Verbraucherkreislauf (10, 11) und eine mit der Mischkammer (5) verbundene Sammeleinrichtung (8) mit Anschlüssen (9) für mindestens einen Rücklauf des mindestens einen Verbraucherkreislaufs (10, 11). Die Mischkammer (5) weist ein elektrisch betreibbares Heizelement (14) und einen Temperaturfühler (13) auf, dessen Temperatursignalinformationen an die Steuereinrichtung (6) übertragbar sind. Das Einspritzventil (4) weist einen elektrischen Stellantrieb auf, der mittels der Steuereinrichtung (6) steuerbar ist.

## Beschreibung

Die Erfindung betrifft eine Steuer- und Versorgungseinrichtung zur steuerbaren Versorgung von mindestens einem Verbraucherkreislauf zum Heizen oder Kühlen von Räumlichkeiten mit einem Wärmeübertragungsmedium.

Aus der Praxis ist es bekannt, dass eine Wärmepumpe eine ausreichende Menge eines erwärmten Wärmeübertragungsmediums wie beispielsweise Wasser bereitstellt, welches über ein Einspritzventil in einen Vorlauf eines Verbraucherkreislaufs der Fußbodenheizung eingespritzt werden kann. Es ist auch bekannt, dass das erwärmte Wärmeübertragungsmedium über ein geeignet geregeltes Mischventil einem Vorlauf eines Verbraucherkreislaufes zugeführt wird. Die gewünschte Wärmeabgabe der Fußbodenheizung kann durch den Anteil des erwärmten Wärmeübertragungsmediums vorgegeben werden, der durch das Einspritzventil oder das Mischventil in den Vorlauf des Verbraucherkreislaufs der Fußbodenheizung beigemischt wird.

Um unabhängig von dem üblicherweise intermittierenden Betrieb der Wärmepumpe zu werden, sind oftmals größere Zwischenspeicher für das durch die Wärmepumpe erwärmte Wärmeübertragungsmedium vorgesehen, aus denen die jeweils benötigte Menge des Wärmeübertragungsmediums entnommen werden kann, die über das Einspritzventil oder das Mischventil in den Zulauf des Verbraucherkreislaufs zudosiert werden kann.

Es sind ebenfalls Kühlanlagen bekannt, bei denen ein mit einer Kältemaschine abgekühltes Wärmeübertragungsmedium wie beispielsweise ein geeignetes Kältemittel einer Kühleinrichtung mit einem Wärmetauscher zugeführt wird, die über ein Gebläse gekühlte Luft abgibt und dadurch die zu kühlenden Räumlichkeiten abkühlt.

Es ist auch bekannt, dass mehrere derartige Kühleinrichtungen bzw. Klimageräte über geeignete Kältemittelkreisläufe mit der regelmäßig außerhalb der zu kühlenden Räumlichkeiten angeordneten Kältemaschine verbunden und von dieser mit dem gekühlten Kältemittel versorgt werden. Da in vielen Fällen ein Zwischenspeicher mit einer größeren Menge an gekühlten Kältemitteln unwirtschaftlich wäre, wird das abgekühlte Kältemittel unmittelbar den angeschlossenen Klimageräten zugeführt. Die Kühlleistung und damit auch die jeweils aktuelle Raumtemperatur sind dabei regelmäßig von dem üblicherweise intermittierenden Betrieb der Kältemaschine abhängig. Temperaturschwankungen innerhalb eines Bereichs um die vorgegebene Raumtemperatur sind dabei unvermeidlich.

Aufgabe der vorliegenden Erfindung ist es demzufolge, eine Steuer- und Versorgungseinrichtung zur steuerbaren Versorgung von mindestens einem Verbraucherkreislauf zum Heizen und/oder Kühlen von Räumlichkeiten mit einem Wärmeübertragungsmedium so auszugestalten, dass mit möglichst einfachen Mitteln ein möglichst gleichmäßiger Betrieb des mindestens einen Verbraucherkreislaufs ermöglicht wird und gegebenenfalls mehrere, unterschiedliche Verbraucherkreisläufe anschließbar sind.

Diese Aufgabe wird gelöst durch eine Steuer- und Versorgungseinrichtung mit einer Mischkammer, die einen mit einem Einspritzventil steuerbaren Zulauf aufweist, mit einer Steuereinrichtung zur Ansteuerung des Einspritzventils, mit einer mit der Mischkammer verbundenen Verteileinrichtung mit Anschlüssen für mindestens einen Vorlauf des mindestens einen Verbraucherkreislaufs und mit einer mit der Mischkammer verbundenen Sammeleinrichtung mit Anschlüssen für mindestens einen Rücklauf des mindestens einen Verbraucherkreislaufs.

Die Anordnung und Verwendung einer Mischkammer in der Steuer- und Versorgungseinrichtung ermöglicht es, die Zudosierung eines beispielsweise mit einer Wärmepumpe erwärmten Wärmeübertragungsmediums mit einer gleichbleibenden vorgegebenen Temperatur zu ermöglichen, ohne dass ein externer Zwischenspeicher erforderlich ist. In Verbindung mit der Verteileinrichtung und der Sammeleinrichtung, welche den Anschluss mindestens eines Verbraucherkreislaufs ermöglichen, kann die erfindungsgemäße Steuer- und Versorgungseinrichtung in Form eines vorgefertigten Bauteils geliefert und vor Ort mit geringem Montageaufwand mit einer geeigneten Wärmepumpe und mit den jeweils vorgesehenen Verbraucherkreisläufen verbunden werden. Mittels geeigneter Adapter können mit einfachen Mitteln unterschiedliche Wärmepumpen oder Verbraucherkreisläufe angeschlossen werden. In vorteilhafter Weise weist dabei die angeschlossene Wärmepumpe einen integrierten Wärmetauscher auf oder ist über einen gesondert angeordneten Wärmetauscher mit der Steuer- und Versorgungseinrichtung verbunden.

Vorzugsweise ist vorgesehen, dass das Mischvolumen der Mischkammer weniger als 5 Liter und insbesondere weniger als 3 Liter beträgt.

Gemäß einer Ausgestaltung des Erfindungsgedankens ist vorgesehen, dass die Verteileinrichtung und die Sammeleinrichtung jeweils mehrere Anschlusseinrichtungen zum Anschließen unterschiedlicher Verbraucherkreisläufe aufweisen. So kann beispielsweise vorgesehen sein, dass an die Verteileinrichtung und an die Sammeleinrichtung jeweils eine Fußbodenheizung und ein Luftzirkulationsgerät mit einer Kühlvorrichtung angeschlossen werden können. Je nach der gewünschten Innentemperatur können der Betrieb der Wärmepumpe und die Ansteuerung der Mischkammer so vorgegeben werden, dass wahlweise entweder die Fußbodenheizung oder das Luftzirkulationsgerät mit dem geeignet temperierten Wärmeübertragungsmedium versorgt und dadurch betrieben werden.

Es ist auch denkbar und wird als ein Vorteil der Erfindung erachtet, dass in einfacher Weise und gegebenenfalls nachrüstbar mit der Steuer- und Versorgungseinrichtung mehrere unterschiedliche Heizungsanlagen wie beispielsweise Warmwasser-Radiatoren und Fußbodenheizungen betrieben werden können.

Um einen vollständig automatisierbaren Betrieb zu ermöglichen, kann es zweckmäßig sein, beispielsweise eine auch reversibel arbeitende Wärmepumpe zur Bereitstellung des erwärmten oder abgekühlten Wärmeübertragungsmediums zu verwenden und die Steuer- und Versorgungseinrichtung derart mit der auch reversibel arbeitenden Wärmepumpe zu verbinden, dass Steuersignale an die Wärmepumpe übertragen werden können und die Steuer- und Versorgungseinrichtung den Betrieb der Wärmepumpe in geeigneter Weise beeinflussen oder steuern kann.

Vorzugsweise ist vorgesehen, dass die Mischkammer ein elektrisch betreibbares Heizelement aufweist. Mit dem elektrisch betreibbaren Heizelement kann die Temperatur des in der Mischkammer befindlichen Wärmeübertragungsmediums exakt vorgegeben und gehalten werden. Auf diese Weise kann beispielsweise ein gegebenenfalls intermittierender Betrieb der Wärmepumpe und eine dadurch bedingte Veränderung der Einspritztemperatur des von der Wärmepumpe gelieferten Wärmeübertragungsmediums auf diese Weise ausgeglichen werden. Die Mischkammer übernimmt mit einer geeigneten Konstanttemperatur-Regelung eine Pufferfunktion und gleicht auch dadurch Schwankungen in der Temperatur des in die Mischkammer eingespritzten Wärmeübertragungsmediums aus. Die über die angeschlossenen Verbraucherkreisläufe vorgegebene Raumtemperatur kann dadurch weitestgehend konstant gehalten werden. Es ist ebenfalls möglich, ausschließlich mit dem elektrisch betreibbaren Heizelement das Wärmeübertragungsmedium auf die erforderliche Vorlauftemperatur zu erwärmen, wie nachfolgend noch erläutert werden wird.

Um kostengünstig und mit einfachen konstruktiven Mitteln eine zuverlässige und rasche Erwärmung des in der Mischkammer befindlichen Wärmeübertragungsmediums zu ermöglichen ist vorgesehen, dass das elektrisch betreibbare Heizelement mindestens einen elektrischen Heizstab aufweist. An Stelle eines Heizstabes kann auch eine andere geeignete Heizvorrichtung verwendet werden.

Um eine Kühlwirkung der Mischkammer zu unterstützen können in der Mischkammer auch eine Kühlvorrichtung oder ein Wärmetauscher zum Kühlen des in der Mischkammer befindlichen Wärmeübertragungsmediums angeordnet sein.

Die Kühlvorrichtung kann als Rohrwendel ausgestaltet sein, der von einem extern zugeführten Kühlmittel durchströmt werden kann. Um eine möglichst kompakte Bauform der Mischkammer zu ermöglichen kann die gewendelte Kühlvorrichtung ein als Heizstab oder Heizrohr ausgestaltetes Heizelement umgeben.

Es ist ebenfalls denkbar und im Hinblick auf eine möglichst effektive wahlweise Erwärmung oder Abkühlung des Wärmeübertragungsmediums vorteilhaft, dass die Steuer- und Versorgungseinrichtung zwei Mischkammern aufweist, die über mindestens eine Fluidleitung miteinander verbunden sind. In der ersten Mischkammer kann ein elektrisch betreibbares Heizelement angeordnet sein, während in der zweiten Mischkammer eine Kühlvorrichtung angeordnet ist. Die Heizvorrichtung und die Kühlvorrichtung können getrennt voneinander betrieben werden. Das Wärmeübertragungsmedium kann von der einen Mischkammer in die andere Mischkammer überführt werden. Zweckmäßigerweise sind beide Mischkammern nacheinander in die angeschlossenen Verbraucherkreisläufe eingebunden.

Um einen geregelten Betrieb der Steuer- und Versorgungseinrichtung zu ermöglichen und die Temperatur des in der Mischkammer befindlichen Wärmeübertragungsmediums exakt vorgeben und gleichmäßig halten zu können ist vorgesehen, dass die Mischkammer einen Temperaturfühler aufweist, dessen Temperatursignalinformationen an die Steuereinrichtung übertragbar sind. Die Steuereinrichtung ermöglicht wiederum die Ansteuerung des Einspritzventils und damit die Zudosierung des von der Wärmepumpe erwärmten oder abgekühlten Wärmeübertragungsmediums in die Mischkammer.

Zweckmäßigerweise ist vorgesehen, dass das Einspritzventil einen elektrischen Stellantrieb aufweist, der mittels der Steuereinrichtung steuerbar ist.

Unabhängig von der Temperatur des durch die Wärmepumpe oder eine Kältemaschine bereitgestellten und in die Mischkammer eingespritzten Wärmeübertragungsmediums kann durch die Ansteuerung des Einspritzventils und die Möglichkeit einer zusätzlichen Erwärmung des in der Mischkammer befindlichen Wärmeübertragungsmediums eine innerhalb eines weiten Bereichs individuell vorgebbare Vorlauftemperatur des Wärmeübertragungsmediums für die an die Verteileinrichtung und die Sammeleinrichtung angeschlossenen Verbraucherkreisläufe ermöglicht werden.

Weiterhin ist es mit der erfindungsgemäßen Steuer- und Versorgungseinrichtung möglich, im Falle eines unwirtschaftlichen Betriebs der angeschlossenen Wärmepumpe eine direkte und kostengünstige zusätzliche Erwärmung des in der Mischkammer befindlichen Wärmeübertragungsmediums zu bewirken, in dem das elektrisch betreibbare Heizelement in Betrieb genommen und zur Erwärmung des
Wärmeübertragungsmediums genutzt wird.

Ein wirtschaftlicher Heizbetrieb eines angeschlossenen Verbraucherkreislaufs ist damit beispielsweise auch in den Übergangszeiten möglich, in denen ein gegebenenfalls kontinuierlicher Betrieb einer Wärmepumpe wenig sinnvoll wäre oder aus Kostengründen vermieden werden soll.

Es kann auch vorgesehen sein, dass die Steuer- und Versorgungseinrichtung einen mit der Wärmepumpe in Wirkverbindung bringbaren Wärmetauscher aufweist. Die Steuer- und Versorgungseinrichtung kann dann auch ohne direkte Steuerung und Einflussmöglichkeit auf eine externe Wärmepumpe durch eine geeignete Ansteuerung und Nutzung des Wärmetauschers wirtschaftlich sinnvoll betrieben und zur Temperierung des Wärmeübertragungsmediums für die angeschlossenen Verbraucherkreisläufe genutzt werden.

Sofern erforderlich oder im Zusammenhang mit einer vorgesehenen Verwendung der Steuer- und Versorgungseinrichtung vorteilhaft, kann vorgesehen sein, dass die Steuer- und Versorgungseinrichtung zusätzliche Bauelemente oder Einrichtungen aufweist, die für einen Betrieb der anzuschließenden Verbraucherkreisläufe erforderlich sind. Derartige Einrichtungen können beispielsweise ein Ausdehnungsgefäß oder eine Umwälzpumpe sein, die in geeigneter Weise mit den angeschlossenen
Verbraucherkreisläufen verbindbar sind.

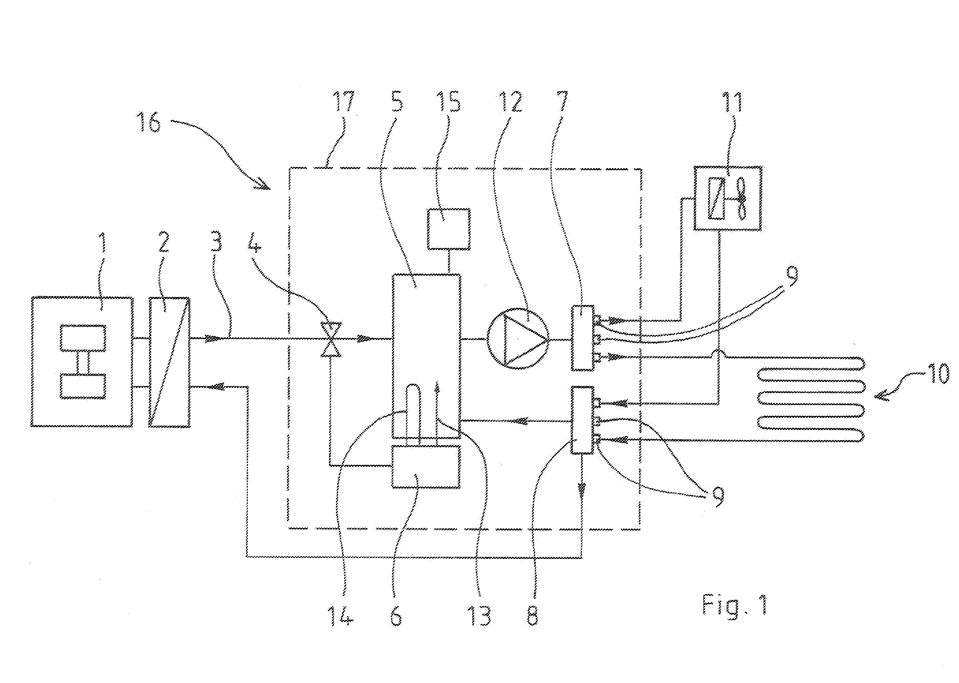

Eine in der Zeichnung exemplarisch dargestellte Ausgestaltung des Erfindungsgedankens wird nachfolgend näher erläutert. Die Figur zeigt einen schematischen Aufbau einer Heizungsanlage und einer Kühleinrichtung, die über eine Steuer- und Versorgungseinrichtung mit einer reversibel arbeitenden Wärmepumpe mit einem integrierten Wärmetauscher verbunden sind.

Eine in der Figur lediglich schematisch dargestellte Wärmepumpe 1 weist einen integrierten Wärmetauscher 2 auf, mittels dessen ein Wärmeübertragungsmedium mit einer vorgebbaren Temperatur bereitgestellt wird. Die Wärmepumpe 1 und der Wärmetauscher 2 sind über eine Zuleitung 3 und ein Einspritzventil 4 mit einer Mischkammer 5 verbunden.

Das Einspritzventil 4 ist weiterhin mit einer Steuereinheit 6 verbunden. Über die Steuereinheit 6 kann mittels eines elektrischen Stellantriebs das Einspritzventil 4 betätigt bzw. geöffnet oder geschlossen werden, so dass durch die Steuereinheit 6 die Zudosierung des mittels der Wärmepumpe 1 und dem Wärmetauscher 2 erwärmtem Wärmeübertragungsmediums in die Mischkammer 5 gesteuert werden kann.

Mit der Mischkammer 5 sind eine Verteileinrichtung 7 und eine Sammeleinrichtung 8 über geeignete Leitungen verbunden. An die Verteileinrichtung 7 und die Sammeleinrichtung 8 sind über geeignete Anschlüsse 9 verschiedene Verbraucherkreisläufe 10, 11 angeschlossen. In dem dargestellten Ausführungsbeispiel ist der Verbraucherkreislauf 10 eine Fußbodenheizung, während der Verbraucherkreislauf 11 ein Luftzirkulationsgerät aufweist. Mittels einer Umwälzpumpe 12 kann das Wärmeübertragungsmedium aus der Mischkammer 5 über die Verteileinrichtung 7 in die daran angeschlossenen Verbraucherkreisläufe 10, 11 und über deren Rückläufe durch die Sammeleinrichtung 8 in die Mischkammer 5 zurück umgewälzt bzw. gefördert werden.

Welcher Verbraucherkreislauf 10, 11 von dem in der Mischkammer 5 temperierten Wärmeübertragungsmedium durchströmt wird und mit welcher Rate die betreffenden Verbraucherkreisläufe 10, 11 durchströmt werden, kann entweder manuell oder mittels der Steuereinheit 6 vorgegeben werden, wobei in diesem Fall die Steuereinheit 6 in geeigneter Weise mit elektrisch betätigbaren Ventilen an den Anschlüssen 9 der Verteileinrichtung 7 und/oder der Sammeleinrichtung 8 verbunden sein muss.

In der Mischkammer 5 sind ein Temperaturfühler 13 und ein elektrisch betreibbares Heizelement 14 angeordnet. Sowohl der Temperaturfühler 13 als auch das Heizelement 14 sind jeweils mit der Steuereinheit 6 verbunden, so dass die mit dem Temperaturfühler 13 ermittelten Temperatursignalinformationen an die Steuereinrichtung 6 übertragen werden können und das elektrisch betreibbare Heizelement mittels der Steuereinheit 6 betätigt bzw. in Betrieb genommen oder ausgeschaltet werden kann. Die Steuereinheit 6 ermöglicht dadurch eine geregelte Ansteuerung des elektrisch betreibbaren Heizelements 14 in Abhängigkeit von einer vorgegebenen Solltemperatur für das in der Mischkammer 5 befindliche Wärmeübertragungsmedium sowie in Abhängigkeit von der mit dem Temperaturfühler 13 ermittelten tatsächlichen Temperatur des Wärmeübertragungsmediums in der Mischkammer 5.

Optional kann ein Ausdehnungsgefäß 15 mit der Mischkammer 5 verbunden werden, um ausschließlich mit dem elektrisch betreibbaren Heizelement das Wärmeübertragungsmedium auf die erforderliche Vorlauftemperatur zu erwärmen, wobei hierbei die Verbindung zu der Wärmepumpe 1, bzw. zu dem Wärmetauscher 2 zweckmäßigerweise unterbrochen wird.

Die einzelnen Elemente, aus denen sich die in dem dargestellten Ausführungsbeispiel beschriebene Steuer- und Versorgungseinrichtung 16 zusammensetzt, sind mittels einer gestrichelten Linie 17 zusammengefasst. Die Steuer- und Versorgungseinrichtung 16 umfasst die Mischkammer 5, das Einspritzventil 4 in Verbindung mit der Wärmepumpe 1, die Verteileinrichtung 7 und die Sammeleinrichtung 8 sowie die Steuereinrichtung 6 zur Ansteuerung des Einspritzventils 4, des Heizelements 14 und der Mischkammer 5 und der Anschlüsse 9 der Verteileinrichtung 7 und der Sammeleinrichtung 8. Die Umwälzpumpe 12 und das Ausdehnungsgefäß 15 können zweckmäßigerweise in die Steuer- und Versorgungseinrichtung 16 integriert sein. Es ist jedoch ebenfalls denkbar, dass den Verbraucherkreisläufen 10, 11 gesonderte Umwälzpumpen und Ausdehnungsgefäße zugeordnet sind, die nicht Bestandteil der Steuer- und Versorgungseinrichtung 16 sind.

## Patentansprüche

1. Steuer- und Versorgungseinrichtung (16) zur steuerbaren Versorgung von mindestens einem Verbraucherkreislauf (10, 11) zum Heizen und/oder Kühlen von Räumlichkeiten mit einem Wärmeübertragungsmedium, mit einer Mischkammer (5), die einen mit einem Einspritzventil (4) steuerbaren Zulauf aufweist, mit einer Steuereinrichtung (6) zur Ansteuerung des Einspritzventils (4), mit einer mit der Mischkammer (5) verbundenen Verteileinrichtung (7) mit Anschlüssen (9) für mindestens einen Vorlauf des mindestens einen Verbraucherkreislaufs (10, 11) und mit einer mit der Mischkammer (5) verbundenen Sammeleinrichtung (8) mit Anschlüssen (9) für mindestens einen Rücklauf des mindestens einen Verbraucherkreislaufs (10, 11).

2. Steuer- und Versorgungseinrichtung nach Anspruch 1, **dadurch gekennzeichnet, dass** das Mischvolumen der Mischkammer (5) weniger als 5 Liter und insbesondere weniger als 3 Liter beträgt.

3. Steuer- und Versorgungseinrichtung nach Anspruch 1 oder 2, **dadurch gekennzeichnet, dass** die Verteileinrichtung (7) und die Sammeleinrichtung (8) mehrere Anschlusseinrichtungen zum Anschließen unterschiedlicher Verbraucherkreisläufe (10, 11) aufweisen.

4. Steuer- und Versorgungseinrichtung nach einem der vorangehenden Ansprüche, **dadurch gekennzeichnet, dass** die Mischkammer (5) ein elektrisch betreibbares Heizelement (14) aufweist.

5. Steuer- und Versorgungseinrichtung nach Anspruch 4, **dadurch gekennzeichnet, dass** das elektrisch betreibbare Heizelement (14) mindestens einen elektrischen Heizstab aufweist.

6. Steuer- und Versorgungseinrichtung nach einem der vorangehenden Ansprüche, **dadurch gekennzeichnet, dass** die Mischkammer (5) eine Kühlvorrichtung oder einen Wärmetauscher zum Kühlen des in der Mischkammer befindlichen Wärmeübertragungsmediums aufweist.

7. Steuer- und Versorgungseinrichtung nach einem der vorangehenden Ansprüche, **dadurch gekennzeichnet, dass** die Steuer- und Versorgungseinrichtung (16) zwei Mischkammern (5) aufweist, die über mindestens eine Fluidleitung miteinander verbunden sind.

8. Steuer- und Versorgungseinrichtung nach einem der vorangehenden Ansprüche, **dadurch gekennzeichnet, dass** die Mischkammer (5) einen Temperaturfühler (13) aufweist, dessen Temperatursignalinformationen an die Steuereinrichtung (6) übertragbar sind.

9. Steuer- und Versorgungseinrichtung nach einem der vorangehenden Ansprüche, **dadurch gekennzeichnet, dass** das Einspritzventil (4) einen elektrischen Stellantrieb aufweist, der mittels der Steuereinrichtung (6) steuerbar ist.

10. Steuer- und Versorgungseinrichtung nach einem der vorangehenden Ansprüche, **dadurch gekennzeichnet, dass** die Steuer- und Versorgungseinrichtung (16) derart mit der auch reversibel arbeitenden Wärmepumpe (1) verbindbar ist, dass Steuersignale an die Wärmepumpe (1) übertragen werden können und die Steuer- und Versorgungseinrichtung (16) den Betrieb der Wärmepumpe (1) in geeigneter Weise beeinflussen oder steuern kann.

11. Steuer- und Versorgungseinrichtung nach einem der vorangehenden Ansprüche, **dadurch gekennzeichnet, dass** die Steuer- und Versorgungseinrichtung (16) einen mit der Wärmepumpe (1) in Wirkverbindung bringbaren Wärmetauscher (2) aufweist.
